# EUROPEAN PATENT SPECIFICATION

(11) **EP 1 626 938 B1**
(45) Date of publication and mention of the grant of the patent: **10.10.2007**
(21) Application number: 04731385.3
(22) Date of filing: 06.05.2004
(51) Int. Cl.: C03B 23/025, C03B 29/08

(54) **METHOD AND FURNACE FOR BENDING GLASS PANELS**
VERFAHREN UND OFEN ZUM BIEGEN VON GLASSCHEIBEN
PROCEDE ET FOUR POUR LE CINTRAGE DE PANNEAUX DE VERRE

(30) Priority: 14.05.2003 FI 20035065
(43) Date of publication of application: 22.02.2006
(73) Proprietor: Tamglass Ltd. Oy, 33730 Tampere (FI)
(72) Inventor: YLI-VAKKURI, Erkki, CH-2300 La Chaux-de-Fonds (CH)
(74) Representative: LEITZINGER OY
(86) International application number: PCT/FI2004/050059
(87) International publication number: WO 2004/101454

(56) References cited:
- EP-A1- 0 558 911
- EP-A1- 0 721 922
- EP-A2- 1 236 692
- WO-A1-01/32570
- US-A- 3 884 667
- US-A- 3 997 317

## Description

The invention relates to a method for bending glass panels, said method comprising supporting a glass panel on a bending mould, conveying the glass panel as well as the bending mould on a carriage through a series of successive preheating compartments, in which the glass panels are heated by convection, carrying the glass panel as well as its mould into a bending compartment for bending the glass panel therein, followed by cooling the bent glass panel.

The invention relates also to a bending furnace, comprising a number of moulds and mould-conveying carriages whose end walls separate the furnace into successive preheating compartments, in which the glass panels are heated by convection, a bending compartment, and cooling compartments preferably below the preheating compartments.

This type of method and furnace are known from the Applicant's patent publications US-A-4,986,842, US-A-5,437,704, and US-A-5,472,469. The first of these describes the way of recovering in an intensified fashion the heat of cooling glass panels in furnace compartments located in the proximity of the loading and unloading end of a furnace. All three publications describe how in the final preheating compartments, in which a glass panel is heated to what is almost the bending temperature, the heating is effected by overhead radiation heating and by additionally utilizing the heat released from cooling glass pieces, which transfers by natural or forced convection through the floors of mould-conveying carriages from the cooling compartment to the preheating compartment. This arrangement is highly functional whenever a furnace operates continuously at full capacity. If, instead, a furnace is run at less than full capacity or at the start of a run (with first glass pieces), the top and bottom glasses develop therebetween a bending-impeding temperature difference as there is no heat-releasing glass in the lower track. A bending-impeding temperature difference may also develop when the temperature of a glass piece presently in the lower track is not sufficiently high.

EP 0 721 922 B1 concerns tempering of flat glass without bending and shows forced convection heating in a pre-heating furnace wherein the air temperature is maintained within a range of 400°C - 500°C. The higher tempering temperature is obtained in a radiation heating furnace, following the pre-heating furnace.

In bending technique based on a ring mould and gravitational bending, it is essential that the top and bottom glasses be heated consistently in both vertical and horizontal directions prior to starting actual bending and a controlled application of heat possibly required in that process.

It is an object of the invention to provide a method and furnace of the above type, whereby the glass or a pair of glass panels to be heated can be preheated to the proximity of a bending temperature rapidly and consistently in both vertical and horizontal directions.

This object is achieved by a method as set forth in claim 1 and by a bending furnace as set forth in claim 5. The dependent claims disclose preferred embodiments of the invention.

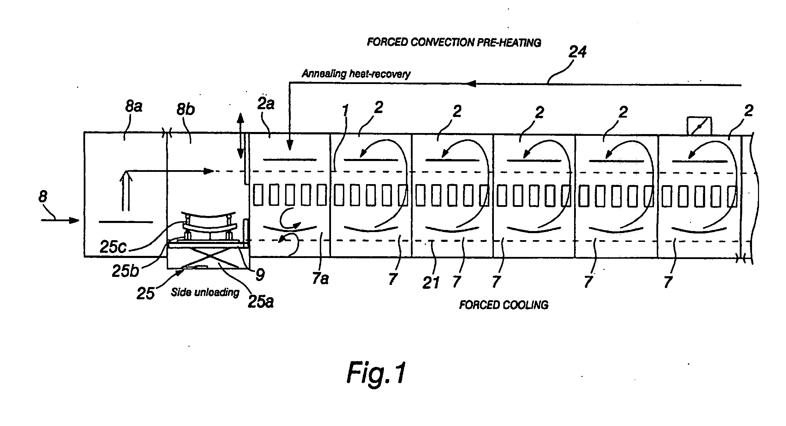

One exemplary embodiment of the invention will now be described in more detail with reference to the accompanying drawings, in which
- Fig. 1: shows the upstream end of an upper track and the downstream end of a lower track in an apparatus of the invention;
- Fig. 2: shows the middle section of an upper track and the middle section of a lower track in a furnace apparatus of the invention, i.e. the region which the invention is involved with and which is more closely visualized in fig. 4;

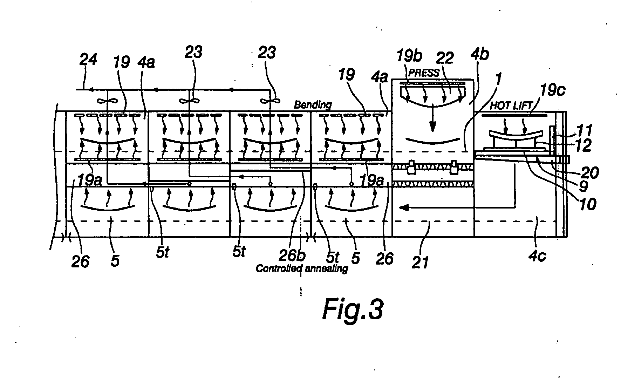

- Fig. 3: shows the downstream end of an upper track and the upstream end of a lower track in a furnace apparatus of the invention, the sections shown in figs. 1, 2 and 3, when set in sequence, constituting a complete furnace apparatus;
- Fig. 4: shows a cross-section from fig. 2 on a larger scale, visualizing the controlled circulation and heating of convection heating air.

The furnace apparatus comprises an upper mould carriage track 1, which carries successive mould carriages 9 whose leading or trailing wall 11 separates successive preheating compartments 2, 3 and a number of successive bending compartments 4a, 4b from each other. The mould carriages 9 are adapted to be Intermittently conveyed towards a final bending compartment 4b, having its ceiling provided with a descendable and ascendable male mould 22. A lower mould carriage track 21 carries successive mould carriages 9 underneath the mould carriages of the upper track 1. The mould carriages 9 of the lower mould carriage track 21 have their leading and trailing walls 11 dividing successive cooling compartments 5, 6, 7 from each other. The mould carriages 9 of the lower track 21 are adapted to be Intermittently conveyed in an opposite direction with respect to the conveying direction of the mould carriages present in the upper mould carriage track.

Every mould carriage 9 contains a bending mould 12 supported by the mould carriage 9. A pair of glass panels is placed on the bending mould 12 while the mould carriage 9 is outside the furnace in a loading compartment 8. The carriage 9, the mould 12, and a pair of glass panels to be bent are lifted by means of an elevator present in a compartment 8a following the loading compartment 8 onto the upper track 1, wherein the mould carriages are conveyed intermittently over a distance essentially equal to the carriage length at a time towards a bending compartment 4b. First in this passage there are preheating compartments 2, in which the heating is based on forced convection, having its thermal energy supplied from glass panels presently cooling by forced convection in cooling compartments 7 below. Thus, in the cooling compartments 7 it is possible to speed up the cooling of glass panels to be cooled and in the heating compartments 2 it is possible to speed up the heating of glass panels to be heated, while the thermal energy of glass panels to be cooled can be exploited more thoroughly than before. The construction and operation of compartments 2 and 7 are described in more detail in the Applicant's patent publication US-A-4,986,842. A difference here is that the first preheating compartment 2a is supplied with hot air by way of a duct 24 from cooling compartments 5 at the lower track's upstream end, each of which is individually provided with a controlled circulation of cooling air by means of exhaust fans 23. Since the compartments 5 are provided with an individually adjustable cooling-air circulation, a glass panel can be cooled in a desired manner and provided with a sufficiently high edge stress.

The number of heating compartments 2 based on the recovery of heat can be 3-6, and a glass panel reaches therein a temperature of 230°C-300°C prior to proceeding to the next preheating compartment 2. However, the compartments 2 may all be replaced with subsequently described preheating compartments 3 to reduce the total number of compartments.

From the compartments 2 the upper-tier carriages 9 arrive in the preheating compartments 3, in which the principal heating of glass panels is effected by hot-air injection with forced convection.

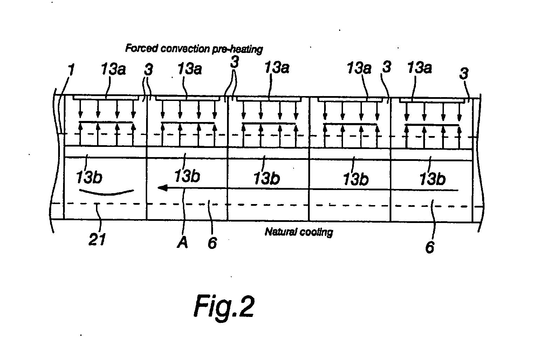

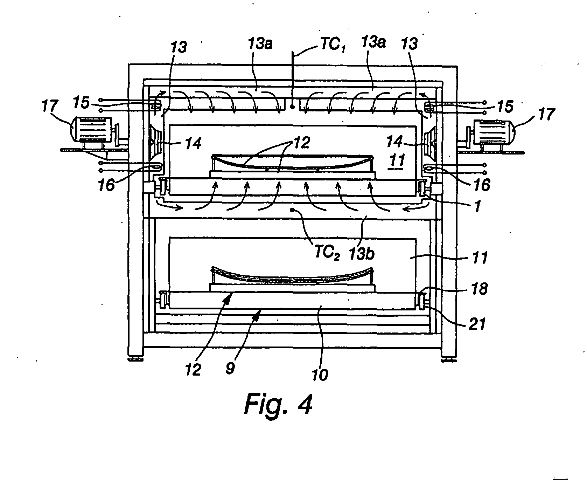

In the preheating compartments 3 (figs. 2 and 4), the heating is effected mainly by hot-air injection applied with forced convection to both sides of a glass panel.

The air used in hot-air injection of forced convection is circulated through heating resistances 15 and 16 fitted in flow channels 13 present in furnace walls. The preheating compartments 3 involve upper air circulation channels 13a and lower air circulation channels 13b, which are provided with orifices or nozzles on the opposite sides of a glass panel for distributing hot-air jets in a substantially consistent fashion over the entire area of a glass panel and for directing the air jets against the top and bottom sides of a glass panel. Fans 14 associated with the channels 13a, 13b aspirate air from the preheating compartments 3 and circulate the air through the heating resistances 15, 16, whereafter the heated air will be injected to the opposite sides of a glass panel with a pressure created by the fans 14.

The outputs of heating resistances 15 and 16 are adapted to be individually adjustable, whereby the temperature of air injected to the top and bottom sides of a glass panel can be adjusted separately. In view of controlled adjustment, the temperatures of air to be injected to the top and bottom sides of a glass panel are separately measured by means of thermoelements T_{C1} and T_{C2}. In addition to temperature adjustment, the ratio between upper and lower convection can be adjusted by regulating the power of injection. This method enables heating the top and bottom glass panel of a pair of glass panels to a substantially equal temperature.

The preheating effected in the compartments 3 differs from the recovery of heat performed in the compartments 2 in the sense that the hot air injected with forced convection into the compartments 2 originates from lower compartments 7, while the hot air injected into the compartments 3 is aspirated from the very same compartments 3 and heated by the resistances 15, 16 as the circulation is guided therethrough.

The number of preheating compartments 3 is usually 3-6. From the preheating compartments 3, the glass panel proceeds to a pre-bending compartment 4a as the glass temperature is e.g. about 530°C-550°C.

The presented furnace is gravitational for simple bending forms and a press-bend type for complex forms. The final preheating compartment 3 is followed by a number of pre-bending compartments 4a, in which the temperature of a pair of glass panels rises to such a degree that the pair of glass panels begins to bend upon a ring mould 12 supporting the same. At a bending temperature, the glass is highly sensitive to temperature changes, such that a change of just a few degrees has a powerful effect on its susceptibility of bending. This can be utilized in bending compartments 4 by adapting resistance element panels 19 to apply to the glass a controlled heating pattern, wherein the heating of desired regions is enhanced with respect to other regions. Thus, in the invention, a glass panel is first maintained at a consistent temperature by means of forced convection up to the point when a quick application or focusing of heat is performed in a bending compartment. On an intermediate floor 26 are radiation heating elements 19a lying beneath the plane defined by floors 10 of the carriages 9. The radiation heating elements 19a heat the bottom one of a pair of glass panels present in the compartments 3 through the carriage's 9 open floor structure 10. The floor 10 need not be a fully open structure as it can be partially dosed, e.g. with a thin perforated plate, a screen or the like, which lets through both convection air in the preceding compartments 2 and 3 and radiation heat from the heating elements 16. The number of pre-bending compartments 4a is sufficient in the sense that gravitational bending in the last pre-bending compartment 4a provides a final bending form in case of simple bending forms and an almost final bending form in case of complex bending forms. In the latter case, the bending is finalized by using an ascendable and descendable male mould 22 present in the bending compartment 4b for pressing the finished form. Resistances 19b are used for maintaining the mould 22 at a sufficiently high temperature. The glass bending temperature lies within the range of 590°C-635°C.

Between the compartments 4a and the cooling compartments 5 therebelow is an Intermediate floor 26, which is provided by means of compartmentation with a channel system for the circulation of cooling air. At three consecutive cooling compartments 5, the Intermediate floor 26 has on its side an intake port for cooling air, which can be standard size or mechanically adjustable in terms of its size. Intermediate boards 26b fitted within the intermediate floors 26 are used for providing the intermediate floors 26 with a plurality of successive and separated flow compartments for cooling air, by way of which the flow of cooling air is separately controllable. Each fan 23 has its injecting performance adjustable by means of an inverter. Consequently, the cooling performances of consecutive cooling zones and/or compartments 5 can be individually regulated.

The bottom surfaces of the intermediate floors 26 equipped with cooling-air flow compartments or the bulkheads of the corresponding cooling compartments 5 are provided with thermoelements 5t for measuring glass temperatures and regulating individually the operation of the cooling air exhaust fans 23. In the cooling compartments 5, the glass is typically cooled to a temperature range of 450°C-500°C.

Downstream of the cooling compartments 5, the mould carriages 9 are adapted to proceed underneath a number of preheating compartments 3 non-stop past compartments 6 in a single passage, as indicated by an arrow A In fig. 2. Over this passage, there will occur slight natural cooling until compartments 7 are reached, in which the cooling is enhanced with forced convection.

The cooled glass panels are unloaded sideways from a compartment 8b. For this purpose the compartment 8b is provided with a hoist 25, whose cylinders 25b, being supported by an articulated jack 25a, lift a glass panel onto props 25c up from the mould. Hence, a glass panel can be picked up from top of the props 25c by a laterally moving cradle (not shown).

If a pair of glass panels bends to a desired form (simple bending forms) as early as in the final gravitational bending compartment 4a, it will be advanced directly through the press-bending compartment 4b into a lift compartment 4c. If necessary (more complex bending forms), a press-bending process is performed In the compartment 4b with a press mould 22, followed by advancing the carriage 9 Into the lift compartment 4c in which the carriage 9 is descended by means of a lift mechanism 20 from the upper track 1 onto the lower track 21. At this point, the cooling of a pair of glass panels is still inhibited by radiation heating resistances 19c in order to enable a commencement of controlled cooling in the first cooling compartment 5.

A method of the invention can also be applied in a preheating furnace for rear window, as well as in a high capacity tunnel furnace. With these furnace types, it is not possible to make use of heat released from the lower track.

A preferred location for the thermoelements T_{C1} and T_{C2} is in the air channels 13a and 13b.

The inventive solution offers benefits as follows:
- Convection-based preheating provides a consistent preheating for top and bottom glass (internal and external glass in service). Mould is heated concurrently with glass.
- A glass missing from lower track 21 or a colder glass present on a lower track does not affect a glass heated on upper track 1.
- Heat released from lower track 21 can be exploited as desired in air circulation present in upper track 1.
- Temperature of air applied to top and bottom glass can be controlled separately by means of resistances 15, 16 present in a channel system, as well as by means of thermoelements T_{C1} and T_{C2}.
- Convection-based preheating provides an improved transfer of heat in coloured or coated windshields.
- Convection-based preheating reduces power required for heating a glass.

## Claims

1. A method for bending glass panels, said method comprising supporting a glass panel on a bending mould (12), conveying the glass panel as well as the bending mould on a carriage (9) through a series of successive preheating compartments (2, 3), in which glass panels are heated by convection, carrying the glass panel as well as the bending mould into a bending compartment (4a, 4b) for bending the glass panel therein, followed by cooling the bent glass panel, **characterized in that** at least in a portion (3) of the preheating compartments (2, 3) the glass is heated by hot-air injection applied to the top and bottom sides of a glass panel, and that the air used in this hot-air injection is circulated through heating elements provided with heating resistances (15, 16) whereby the air is heated to a desired temperature so as to raise the temperature of the glass panels in said portion (3) of the preheating compartments (2,3) to a temperature between 530 and 590°C.

2. A method as set forth in claim 1, **characterized in that** the air to be injected to the top side of a glass panel is circulated through a first heating element (15) and the air to be injected to the bottom side through a second heating element (16), and that the first (15) and second (16) heating elements have their outputs adjusted individually.

3. A method as set forth in claim 1 or 2, **characterized in that** temperatures (T_{C1}, T_{C2}) of the air injected to the top and bottom sides of a glass panel are measured separately and the heating elements (15, 16) have their outputs adjusted on the basis of measured results.

4. A method as set forth in any of claims 1-3, wherein glass panels are allowed to cool in cooling compartments (7) beneath such a portion (2) of the preheating compartments (2, 3), which are not equipped with said heated hot-air injection, **characterized in that** the mould carriages (9) are conveyed non-stop past and under two or more preheating compartments (3) equipped with the heated hot-air injection.

5. A furnace for bending glass panels, comprising a number of bending moulds (12) and mould-conveying carriages (9) whose end walls (11) compartmentize the furnace into successive preheating compartments (2, 3), in which the glass panels are heated by convection, a bending compartment (4a, 4b), and cooling compartments (5-7) preferably below the preheating compartments (2, 3) and possible pre-bending compartments (4a), **characterized in that** at least a portion (3) of the preheating compartments (2, 3) is associated with air circulation channels (13, 13a, 13b), heating elements (15, 16) and fans (14) therein for circulating the air aspirated from the preheating compartments (3) through the heating elements (15, 16) and for injecting the heated air to the opposite sides of a glass panel in said portion (3) of the preheating compartments (2, 3) so as to raise the temperature of the glass panels in said portion (3) of the preheating compartments (2, 3) to a temperature between 530 and 590°C.

6. A furnace as set forth in claim 5, **characterized in that** the air circulation channels (13, 13a, 13b) applying heating air to the top and bottom sides of a glass panel are provided with individually adjustable heating elements provided with heating resistances (15, 16), hence the temperatures of heating air applied to the top and bottom sides of a glass panel being individually adjustable.

7. A furnace as set forth in claim 5 or 6, **characterized in that** the air circulation channels (13, 13a, 13b) are located in the preheating compartments (3) on the opposite sides of a glass panel and provided with orifices or nozzles for distributing hot-air jets in a substantially consistent manner over the entire area of a glass panel and for directing the same against the top and bottom sides of a glass panel.

## Patentansprüche

1. Verfahren zum Biegen von Glasscheiben, wobei das Verfahren Tragen einer Glasscheibe auf einer Biegeform (12), Transportieren der Glasscheibe sowie der Biegeform auf einem Wagen (9) durch eine Reihe aufeinanderfolgender Vorheizkammern (2, 3), in denen Glasscheiben durch Konvektion erhitzt werden, Leiten der Glasscheibe sowie der Biegeform in eine Biegekammer (4a, 4b) zum Biegen der Glasscheibe darin, gefolgt von Abkühlen der gebogenen Glasscheibe umfasst, **dadurch gekennzeichnet, dass** wenigstens in einem Abschnitt (3) der Vorheizkammern (2, 3) das Glas durch Heißlufteinblasen erhitzt wird, das auf der Ober- und Unterseite einer Glasscheibe einwirkt, und dass die Luft, die bei diesem Heißlufteinblasen verwendet wird, durch Heizelemente zirkuliert, die mit Heizwiderständen (15, 16) versehen sind, so dass die Luft auf eine gewünschte Temperatur erhitzt wird, um die Temperatur der Glasscheiben in dem Abschnitt (3) der Vorheizkammern (2, 3) auf eine Temperatur zwischen 530 und 590°C zu erhöhen.

2. Verfahren nach Anspruch 1, **dadurch gekennzeichnet, dass** die auf die Oberseite einer Glasscheibe zu blasende Luft durch ein erstes Heizelement (15) zirkuliert und die auf die Unterseite zu blasende Luft durch ein zweites Heizelement (16) zirkuliert und dass der Ausgang des ersten (15) und der des zweiten Heizelementes individuell reguliert werden.

3. Verfahren nach Anspruch 1 oder 2, **dadurch gekennzeichnet, dass** Temperaturen (T_{c1}, T_{c2}) der Luft, die auf die Ober- und die Unterseite einer Glasscheibe geblasen wird, separat gemessen werden, und die Ausgänge der Heizelemente (15, 16) auf Basis gemessener Ergebnisse reguliert werden.

4. Verfahren nach einem der Ansprüche 1 - 3, wobei Glasscheiben in Kühlkammern (7) unter einem Abschnitt (2) der Vorheizkammern (2, 3) abkühlen können, die nicht mit Heißlufteinblasung versehen sind, **dadurch gekennzeichnet, dass** die Formwagen (9) ohne Unterbrechung an zwei oder mehr Vorheizkammern (3), die mit der Heißlufteinblasung ausgestattet sind, vorbei und unter ihnen transportiert werden.

5. Ofen zum Biegen von Glasscheiben, der eine Anzahl von Biegeformen (12) und Formtransportwagen (9), deren Abschlusswände (11) den Ofen in aufeinanderfolgende Vorheizkammern (2, 3) unterteilen, in denen die Glasscheiben durch Konvektion erhitzt werden, eine Biegekammer (4a, 4b) und Kühlkammern (5, 7) vorzugsweise unterhalb der Vorheizkammern (2, 3) und möglicherweise Vorbiegekammern (4a) umfasst, **dadurch gekennzeichnet, dass** wenigstens ein Abschnitt (3) der Vorheizkammern (2, 3) mit Luftzirkulationskanälen (13, 13a, 13b), Heizelementen (15, 16) und Gebläsen (14) darin zum Zirkulieren der aus den Vorheizkammern (13) angesaugten Luft durch die Heizelemente (15, 16) sowie zum Einblasen der erhitzten Luft auf die einander gegenüberliegenden Seiten einer Glasscheibe in dem Abschnitt (3) der Vorheizkammern (2, 3) verbunden ist, um so die Temperatur der Glasscheiben in dem Abschnitt (3) der Vorheizkammern (2, 3) auf eine Temperatur zwischen 530 und 590°C zu erhöhen.

6. Ofen nach Anspruch 5, **dadurch gekennzeichnet, dass** die Luftzirkulationskanäle (13, 13a, 13b), die Luft auf die Ober- und die Unterseite einer Glasscheibe einwirken lassen, mit individuell regulierbaren Heizelementen versehen sind, die mit Heizwiderständen (15, 16) versehen sind, so dass die Temperatur von Heizluft, die auf die Ober- und die Unterseite der Glasscheibe einwirkt, individuell reguliert werden kann.

7. Ofen nach Anspruch 5 oder 6, **dadurch gekennzeichnet, dass** sich die Luftzirkulationskanäle (13, 13a, 13b) in den Vorheizkammern (3) an den gegenüberliegenden Seiten einer Glasscheibe befinden und mit Öffnungen oder Düsen versehen sind, um Heißluftstrahlen auf eine im Wesentlichen gleichbleibende Weise über die gesamte Fläche einer Glasscheibe zu verteilen und diese auf die Ober- und die Unterseite einer Glasscheibe zu richten.

## Revendications

1. Procédé pour le cintrage de panneaux de verre, ledit procédé comprenant le support d'un panneau de verre sur un moule de cintrage (12), l'acheminement du panneau de verre ainsi que du moule de cintrage sur un chariot (9) au travers d'une série de compartiments de préchauffage successifs (2, 3), dans lequel les panneaux de verre sont chauffés par convection, l'acheminement du panneau de verre ainsi que du moule de cintrage dans un compartiment de cintrage (4a, 4b) pour cintrer le panneau de verre dans celui-ci, suivi par le refroidissement du panneau de verre cintré, **caractérisé en ce qu'**au moins dans une partie (3) des compartiments de préchauffage (2, 3) le verre est chauffé par injection d'air chaud appliquée aux côtés supérieur et inférieur d'un panneau de verre et **en ce que** l'air utilisé dans cette injection d'air chaud est amené à circuler au travers d'éléments de chauffage munis de résistances de chauffage (15, 16) de sorte que l'air est chauffé à une température désirée pour élever la température des panneaux de verre dans ladite partie (3) des compartiments de préchauffage (2, 3), à une température comprise entre 530 et 590° C.

2. Procédé selon la revendication 1, **caractérisé en ce que** l'air à injecter au côté supérieur d'un panneau de verre est amené à circuler au travers d'un premier élément de chauffage 15 et l'air à injecter au côté inférieur au travers d'un deuxième élément de chauffage (16) et **en ce que** le premier élément (15) et le deuxième élément (16) de chauffage ont leurs sorties ajustées individuellement.

3. Procédé selon la revendication 1 ou 2, **caractérisé en ce que** les températures (T_{C1}, T_{C2}) de l'air injecté aux côtés supérieur et inférieur d'un panneau de verre sont mesurées séparément et les éléments de chauffage (15, 16) ont leurs sorties ajustées sur la base des résultats mesurés.

4. Procédé selon l'une quelconque des revendications 1 à 3, dans lequel les panneaux de verre sont amenés à refroidir dans des compartiments de refroidissement (7) en dessous d'une telle partie (2) des compartiments de préchauffage (2, 3) qui ne sont pas munis de ladite injection d'air chaud chauffé, **caractérisé en ce que** les chariots de moule (9) sont acheminés sans arrêt au-delà et sous deux ou plusieurs compartiments de préchauffage (3) munis de l'injection d'air chaud chauffé.

5. Four pour le cintrage de panneaux de verre, comprenant plusieurs moules de cintrage (12) et des chariots d'acheminement de moule (9) dont les parois d'extrémité (11) fractionnent le four en compartiments de préchauffage successifs (2, 3) dans lequel les panneaux de verre sont chauffés par convection, un compartiment de cintrage (4a, 4b) et des compartiments de refroidissement (5, 7), de préférence en dessous des compartiments de préchauffage (2, 3) et des compartiments de pré-cintrage éventuel (4a), **caractérisé en ce qu'**au moins une partie (3) des compartiments de préchauffage (2, 3) est associée aux canaux de circulation d'air (13, 13a, 13b), des éléments de chauffage (15, 16) et des ventilateurs (14) pour faire circuler l'air aspiré des compartiments de préchauffage (3) au travers des éléments de chauffage (15, 16) et pour injecter l'air chauffé aux côtés opposés d'un panneau de verre dans ladite partie (3) des compartiments de préchauffage (2, 3) afin d'élever la température des panneaux de verre dans ladite partie (3) des compartiments de préchauffage (2, 3) à une température comprise entre 530 et 590° C.

6. Four selon la revendication 5, **caractérisé en ce que** les canaux de circulation d'air (13, 13a, 13b) appliquant de l'air de chauffage aux côtés supérieur et inférieur d'un panneau de verre sont munis d'éléments de chauffage individuellement réglables munis de résistances de chauffage (15, 16), ainsi les températures de l'air de chauffage appliqué aux côtés supérieur et inférieur d'un panneau de verre sont ajustables individuellement.

7. Four selon la revendication 5 ou 6, **caractérisé en ce que** les canaux de circulation d'air (13, 13a, 13b) sont situés dans les compartiments de préchauffage (3) sur les côtés opposés d'un panneau de verre et sont munis d'orifices ou d'ajutages pour répartir les jets d'air chaud d'une façon essentiellement compatible sur toute la surface d'un panneau de verre et pour les diriger contre les côtés supérieur et inférieur d'un panneau de verre.
